# FASCICULE DE BREVET EUROPEEN

(11) **EP 3 058 606 B1**
(45) Date de publication et mention de la délivrance du brevet: **21.03.2018**
(21) Numéro de dépôt: 14789214.5
(22) Date de dépôt: 16.10.2014
(51) Int. Cl.: H01M 2/10, H01M 10/04

(54) **ENSEMBLE DE STOCKAGE D'ÉNERGIE ÉLECTRIQUE ET PROCÉDÉ D'ASSEMBLAGE D'UN TEL ENSEMBLE**
STROMSPEICHEREINHEIT UND MONTAGEVERFAHREN FÜR SOLCH EINE EINHEIT
ELECTRICITY STORAGE UNIT AND ASSEMBLY METHOD FOR SUCH A UNIT

(30) Priorité: 16.10.2013 FR 1360082
(43) Date de publication de la demande: 24.08.2016
(73) Titulaire: Blue Solutions, 29500 Ergué Gabéric (FR)
(72) Inventeur: HASCOET, Xavier, F-29470 Plougastel Daoulas (FR); BAYLARD, Eric, F-29480 Le Relecq Kerhuon (FR); VIGNERAS, Erwan, F-29000 Quimper (FR)
(74) Mandataire: Regimbeau
(86) Numéro de dépôt international: PCT/EP2014/072239
(87) Numéro de publication internationale: WO 2015/055774

(56) Documents cités:
- WO-A1-2011/134828
- FR-A- 629 021
- US-A- 5 558 949
- US-A1- 2008 063 934
- US-A1- 2012 326 665

## Description

L'objet de l'invention est la réalisation d'un ensemble de stockage d'énergie électrique, notamment pour véhicule électrique.

On connait déjà de nombreux véhicules fonctionnant à l'aide de batteries électriques. Ils comprennent généralement un ensemble de stockage d'énergie placé au niveau de leur plancher, comportant une enveloppe rigide et, à l'intérieur de cette enveloppe rigide, une pluralité de cellules de stockage (ou batteries élémentaires). Chaque cellule comprend une pluralité de cathodes et d'anodes placées dans un boîtier, les cellules étant ensuite connectées en série.

L'invention se situe dans le domaine de l'assemblage mécanique des cellules de stockage d'énergie pour former un ensemble.

On connaît dans l'état de la technique de nombreux ensembles de batteries comportant une pluralité de cellules de stockage.

Le document FR 629021 décrit un exemple de boîte support pour accumulateurs comportant des taquets en forme de coin et de cales pour former amortisseurs ou tampons.

Le document US 5558949 décrit un autre exemple de boîtier de batterie comportant des éléments de calage.

Selon un mode de réalisation particulier ces cellules de stockage comportent chacune un boîtier parallélépipédique comportant sur deux de ses faces latérales opposées des moyens de positionnement aptes à coopérer avec des moyens complémentaires de la cellule adjacente.

Une fois les moyens de positionnement mis en coopération, on met en place des moyens de fixation qui relient les boîtiers des cellules entre eux, deux à deux, constituant ainsi une poutre rigide. Ces moyens de fixation relient des traverses superposées en partie haute de chaque cellule, s'étendant en saillie des parois latérales des cellules. Des moyens de fixation relient également les cellules à l'enveloppe. En partie basse, on applique par exemple une traverse entre chaque paire de deux cellules, laquelle traverse est en appui sur les moyens de positionnement et fixée également au fond de l'enveloppe pour solidariser la poutre à l'enveloppe.

Un tel mode de réalisation permet d'assurer une bonne liaison des boîtiers entre eux ainsi qu'une bonne rigidité de l'ensemble en résultant. Toutefois, ce mode de réalisation rend les opérations de maintenance des cellules complexe puisqu'il ne permet pas de démonter et d'intervenir facilement sur chacune des cellules. Pour atteindre une cellule, il faut en effet retirer de l'enveloppe la poutre formée par l'assemblage des cellules, démonter la liaison des cellules, et enlever le câblage. De même, pour remonter l'ensemble de stockage, il faut remonter la poutre rigide à l'aide des différentes cellules, remettre en place le câblage et replacer et fixer la poutre dans l'enveloppe.

En outre, les vibrations engendrées par le roulement du véhicule peuvent générer un matage, c'est-à-dire une déformation plastique, de la liaison entre les cellules, ce qui est susceptible d'entraîner une rupture de ladite liaison, diminuant ainsi la durée de vie de l'ensemble ou générant du bruit.

L'invention a pour but de proposer un système d'assemblage de cellules dans un ensemble de stockage, qui soit adapté à l'utilisation de l'ensemble dans un véhicule, et notamment qui résiste aux vibrations, tout en permettant de faciliter le démontage de l'ensemble pour faciliter les opérations de maintenance. L'invention a ainsi pour objectif d'améliorer la durée de vie de l'ensemble en optimisant la conception mécanique de celui-ci.

A cet effet, l'invention propose un ensemble de stockage d'énergie tel que défini en revendication 1 annexée.

Ainsi, les cellules sont disposées côte à côte dans l'ensemble sans être fixées entre elles et sans pour autant s'entrechoquer du fait des vibrations. Les butées déformables permettent en effet d'éviter les chocs entre les cellules et ainsi de s'adapter à l'environnement exigeant des véhicules automobiles, quelle que soit la position de l'ensemble dans celui-ci. La présence des moyens de plaquage permet également d'immobiliser les cellules relativement à l'enveloppe. De ce fait, les cellules sont démontables indépendamment les unes des autres. Pour sortir une cellule de l'ensemble, il suffit en effet de démonter la fixation des moyens amovibles de plaquage. On peut ensuite sortir une cellule choisie en maintenance de l'ensemble sans avoir besoin de sortir la totalité des cellules de l'ensemble.

Dans la suite, on considère que au moins une pluralité de cellules disposées côte à côte et de préférence chaque cellule comporte un boîtier essentiellement parallélépipédique.

Selon d'autres caractéristiques avantageuses, mais non limitatives, concernant les butées :
- au moins une dimension desdites butées est inférieure à la dimension de la paroi associée de la cellule. On économise ainsi des coûts de fabrication en diminuant la surface utile des butées. Il suffit en effet que les butées soient placées aux endroits stratégiques dans lesquels les cellules risquent le plus d'entrer en collision,
- au moins deux butées s'étendent entre chaque paire de cellules, au voisinage de la paroi de référence et d'une paroi opposée à la paroi de référence, constituée notamment par la paroi supérieure, ce qui permet d'assurer une meilleure protection des cellules soumises aux vibrations,
- L'une au moins des butées, notamment toutes les butées comprennent deux parois destinées à longer au moins deux parois distinctes d'au moins l'une des cellules de stockage. Les parois de la butée sont de préférence essentiellement perpendiculaires entre elles. On atténue ainsi encore mieux les vibrations en évitant aussi les collisions entre la cellule et la paroi adjacente de l'enveloppe et on cale la cellule selon deux directions. L'une de ces parois peut par exemple être interposée entre les cellules et la paroi de référence, notamment inférieure, de l'enveloppe. Alternativement, une paroi peut également être sensiblement perpendiculaire à la paroi de référence, notamment inférieure du boîtier et à la paroi principale de la butée, placée entre les cellules,

- au moins une des butées peut comprendre une paroi s'étendant entre la paroi opposée à la paroi de référence (paroi supérieure de préférence) et la cellule, notamment entre les moyens de plaquage et la cellule. Cette butée permet donc d'améliorer le calage de la cellule et de diminuer les vibrations transmises à la cellule même loin de la paroi de référence,
- De façon préférentielle, chaque butée peut comprendre trois parois longeant trois parois distinctes d'au moins une cellule de stockage d'énergie. Les trois parois de la butée sont essentiellement perpendiculaires entre elles et sont destinées à recevoir un coin d'un boîtier d'une cellule de stockage d'énergie. Elles sont ainsi de forme complémentaire du coin de la cellule. Elles sont de fait agencées en coin de cube. L'ensemble comprend plus particulièrement une pluralité de butées, notamment au moins 4, de préférence 8, chacune étant associée à un coin du boîtier de chaque cellule de stockage d'énergie adjacent à la paroi de référence ou à la paroi opposée à ladite paroi de référence. Ces butées permettent ainsi de caler la cellule selon les trois directions distinctes et d'atténuer les vibrations à la fois en évitant que les cellules s'entrechoquent mais également que chaque cellule ne heurte l'enveloppe au niveau de sa paroi inférieure ou supérieure et de sa paroi latérale. Par ailleurs, les dimensions des butées peuvent être particulièrement réduites avec une telle configuration. Il n'est en effet pas nécessaire que les butées ou à tout le moins toutes les butées s'étendent tout le long des parois des cellules. En recouvrant uniquement les coins de chaque boîtier, on empêche déjà tout contact direct entre chaque cellule et l'enveloppe ou entre cellules adjacentes,
- Alternativement, bien entendu, les butées peuvent prendre toute autre forme. Elles peuvent ne s'étendre que selon une direction, et/ou longer la paroi de l'une des cellules selon la totalité de sa dimension,
- Selon une autre variante, les butées associées à différentes cellules sont d'un seul tenant : une butée peut par exemple comprendre au moins une paroi commune longeant une paroi de l'enveloppe et les parois correspondantes d'au moins deux cellules adjacentes, en s'étendant éventuellement tout le long de la paroi de l'enveloppe, et comprenant au moins une paroi s'étendant en saillie de la paroi commune, la ou l'au moins une des parois en saillie formant une paroi principale s'étendant entre deux cellules adjacentes. Une seule butée en forme de peigne ou de rail peut par exemple être agencée au voisinage de la paroi inférieure ou supérieure pour le calage de toutes les cellules,
- En particulier, au moins une butée peut comprendre une première paroi commune, une deuxième paroi commune orthogonale à la première paroi commune et une paroi centrale formant paroi principale, orthogonale aux deux parois communes et qui raccorde celles-ci, notamment à mi-largeur, au niveau de la concavité formée des deux parois communes, de façon à former deux parties concaves en coin de cube situées de part et d'autre de la paroi principale et de préférence symétriques relativement à celle-ci. Autrement dit, la butée selon ce mode de réalisation est l'équivalent de deux butées de forme complémentaire d'un coin de la cellule accolées et d'un seul tenant. Cette configuration permet de limiter le nombre de butées et les coûts de fabrication associés à l'ensemble,
- Les butées peuvent également être combinées dans le cas où elles sont de forme plus simple avec des plaques également réalisées en un matériau élastiquement déformable et destinées à être disposée sur l'une ou l'autre des parois de l'enveloppe, afin d'éviter la vibration des cellules contre les parois de l'enveloppe,
- L'enveloppe peut également comprendre sur une de ses parois, notamment la paroi de référence ou la paroi opposée à la paroi de référence, au moins un rail assurant le positionnement d'au moins une butée. Au moins une butée peut alors être configurée en forme de plot qui comporte deux parties symétriques en forme de L et reliées par leur sommet tout en ménageant une lumière entre deux ailes, sous ce sommet, pour permettre d'engager ce plot sur un rail de l'enveloppe, les deux ailes étant destinées à former la paroi principale de la butée en étant placées entre deux cellules adjacentes,
- Les butées sont de préférence réalisées en un matériau thermiquement isolant, de façon à découpler thermiquement les cellules et l'enveloppe et à limiter les pertes thermiques dues au contact de l'enveloppe avec l'air environnant. Evidemment, les butées n'assurent pas forcément seules, l'isolation thermique entre les cellules et l'enveloppe,
- Les butées sont alors notamment réalisées en un matériau élastomère tel qu'un caoutchouc ou un EPDM ou un thermoplastique ou un matériau alvéolaire (mousse) non métallique,
- Au moins l'une des butées est d'un seul tenant avec l'une des parois de l'ensemble (notamment supérieure ou inférieure) ou rapportée sur l'une de ces parois. Les butées peuvent alternativement également être rapportées sur la cellule directement,
- Les butées peuvent comprendre une ou plusieurs formes d'anti-retour s'étendant en saillie de l'une des parois, notamment de celle destinée à être placée entre les cellules, et permettant d'éviter qu'une cellule ne se désengage des butées. Ces formes d'anti-retour peuvent éventuellement coopérer avec le boîtier de la cellule, par exemple s'engager dans des encoches du boîtier de la cellule ou être en frottement contre des zones rugueuses ou adhérentes.

Selon d'autres caractéristiques avantageuses, mais non limitatives, concernant les moyens de plaquage :
- Les moyens de fixation amovibles associés aux moyens de plaquage sont configurés de façon à être plus proches de la paroi opposée à la paroi de référence que de la paroi de référence. En d'autres termes, lorsque la paroi de référence est la paroi inférieure, ces moyens sont préférentiellement situés dans la moitié supérieure de l'enveloppe, de façon à les rendre plus accessibles,
- Les moyens de plaquage sont de préférence destinés à appuyer sur la ou les butées interposées entre l'une des cellules et la paroi opposée à la paroi de référence, notamment supérieure, de l'ensemble afin de maintenir ces butées en place malgré les vibrations subies. Cela n'est bien sûr pas nécessaire lorsque les butées sont d'un seul tenant avec la paroi supérieure de l'enveloppe. Dans ce cas, la paroi supérieure de l'enveloppe peut faire office de moyen de plaquage. Il faut dans ce cas que ses propriétés mécaniques soient adaptées. Pour cette raison, il peut être intéressant d'avoir des moyens de plaquage distincts de la paroi opposée à la paroi de référence,
- Les moyens de plaquage sont configurés pour n'effectuer l'appui que sur deux cellules à la fois au maximum, ce qui permet de mieux gérer les spécificités (tolérances de fabrication) de chacune des cellules. Alternativement, l'invention englobe également des moyens de plaquage qui appuient sur chacune des cellules (paroi supérieure de l'enveloppe, traverse s'étendant sur toute la dimension de l'ensemble),
- Les moyens de plaquage comportent un élément en forme de L destiné à venir se fixer sur l'enveloppe, notamment la première partie de l'enveloppe, et à appuyer sur une paroi d'au moins une cellule, notamment à l'interface de deux cellules. Alternativement, les moyens de plaquage peuvent comprendre un cerclage formé par deux brins dont une extrémité liée est reliée à la paroi de référence de l'enveloppe et destinés à coopérer au voisinage de leur extrémité libre de façon à entourer au moins une cellule, et notamment chaque cellule,
- L'élément en L est configuré pour prendre plusieurs positions relativement à un socle solidaire de l'enveloppe, notamment de sa première partie, ou partie inférieure, sur lequel il est posé, de sorte que la position de l'élément en L peut varier légèrement en hauteur en fonction de la configuration des cellules (tolérances de fabrication de celles-ci notamment). De cette façon, les cellules peuvent toutes être correctement bloquées par l'élément en L,
- De préférence, l'élément en L et son socle comprennent chacun une pente non nulle relativement à la paroi de référence de l'enveloppe de sorte que toutes les cellules peuvent être correctement plaquées contre la paroi de référence, même si leurs dimensions selon la direction normale à la paroi de référence ne sont pas strictement identiques,
- L'élément en L peut être conçu pour accueillir une butée.

Selon d'autres caractéristiques avantageuses, mais non limitatives, concernant l'enveloppe en général :
- L'enveloppe est de forme essentiellement parallélépipédique,
- L'enveloppe comprend sur sa paroi de référence et/ou sur la paroi opposée à la paroi de référence au moins un rail s'étendant sensiblement perpendiculairement à cette paroi pour le positionnement d'au moins une butée, ladite butée comprenant le cas échéant au moins deux parties destinées à venir se placer respectivement de chaque côté du rail, comme expliqué plus haut. Ces rails permettent de marquer des emplacements distincts pour chacune des cellules. Chaque rail peut être un gousset placé par exemple sur un renfort. Il peut s'étendre sur toute la dimension de la paroi inférieure de l'enveloppe ou seulement sur une portion de sa dimension, notamment au voisinage de chacune de ses extrémités,
- L'enveloppe comprend également des moyens démontables de fixation de la butée relativement à la paroi inférieure de l'enveloppe, notamment au rail de celle-ci.
- L'enveloppe comprend d'une part une première partie comportant la paroi de référence, notamment inférieure, et les parois latérales et une deuxième partie (formant couvercle) comprenant la paroi opposée à celle de référence, notamment supérieure. Cela est la solution la plus simple au niveau de la démontabilité de l'ensemble et on extrait alors les cellules de l'enveloppe par le haut. Alternativement, la paroi supérieure peut être d'un seul tenant avec les parois latérales. L'enveloppe peut également comprendre deux demi-coquilles, l'une comprenant la paroi supérieure et l'autre la paroi inférieure. Les parois de l'enveloppe peuvent également être toutes indépendantes les unes des autres.

La présente invention concerne également un procédé de montage de l'ensemble précité selon l'invention comprenant les étapes suivantes :
- sur une paroi destinée à former la paroi de référence, notamment inférieure, de l'ensemble sur laquelle sont agencées une pluralité de butées élastiquement déformables, mise en place des cellules de sorte qu'au moins une butée soit intercalée entre chaque paire de cellules adjacentes,
- mise en place des moyens de plaquage configurés pour appuyer contre les cellules afin de les plaquer contre la paroi de référence de l'enveloppe de sorte que ces moyens soient fixés de façon amovible relativement à la première partie de l'enveloppe comportant la paroi de référence.

Le procédé peut de préférence comprendre une étape préalable de mise en place des butées déformables sur la paroi de référence de l'enveloppe à des emplacements prédéterminés de ladite paroi.

Les moyens de plaquage sont de préférence fixés au voisinage de la paroi de l'enveloppe opposée à la paroi de référence afin d'être plus accessible et de faciliter le démontage.

Le procédé comprend également une étape de mise en place de butées déformables supplémentaires sur les cellules de sorte que ces butées déformables soient intercalées entre deux cellules au voisinage de la paroi opposée à la paroi de référence de l'enveloppe et/ou entre au moins l'une des cellules et la paroi opposée à la paroi de référence de l'enveloppe, avant la fixation des moyens de plaquage relativement à l'enveloppe.

D'autres caractéristiques, buts et avantages de la présente invention apparaitront mieux à la lecture de la description détaillée qui va suivre, faite en référence aux figures annexées données à titre d'exemples non limitatifs et sur lesquels :
La figure 1 représente une vue en perspective d'une enveloppe d'un ensemble, et illustre notamment des rails et des plots formant butée portés par cette paroi inférieure, et représente également schématiquement une paroi supérieure complémentaire,
La figure 2 représente une vue latérale d'une cellule d'extrémité au contact d'une autre cellule adjacente avec des butées intercalées,
La figure 3 représente une vue en perspective de moyens de plaquages formés de leviers d'appui en position,
La figure 4 représente une vue en perspective d'un moyen de plaquage formé d'un élément en L,
La figure 5 représente une vue en perspective d'un tel élément en L mis en place,
La figure 6 représente une vue en perspective d'une butée conforme à un autre mode de réalisation de l'invention,
La figure 7 représente une vue en perspective d'un autre moyen de plaquage conforme à la présente invention,
La figure 8 représente une variante de réalisation de moyens de plaquage conformes à la présente invention sous forme de cerclages mis en plage sur les cellules.

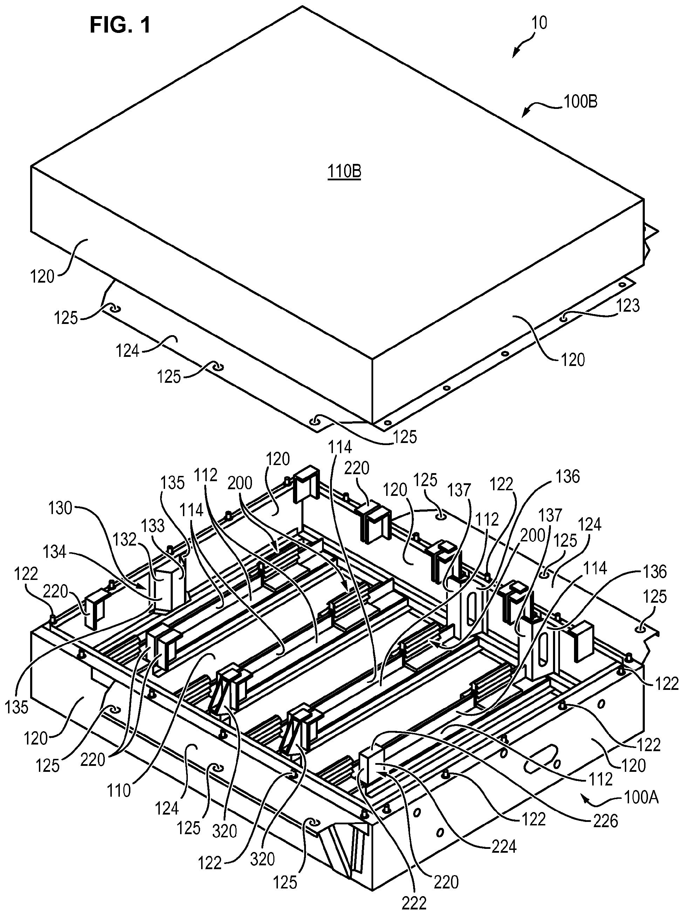

Comme indiqué précédemment, l'invention a pour objet un ensemble de stockage comprenant une pluralité de cellules de stockage d'énergie 1, à savoir des batteries électriques élémentaires. L'exemple illustré sur la figure 1 est destiné à recevoir quatre cellules 1, mais ce nombre n'est pas limitatif.

Chaque cellule 1 comprend une pluralité d'électrodes (anode et cathode) empilées avec interposition d'un électrolyte et reliées électriquement entre elles. L'empilement est inséré dans un boîtier parallélépipédique comportant des bornes pour relier la cellule à d'autres composants électriques, notamment les autres cellules. Ceci est connu de l'homme de l'art et ne sera donc pas décrit plus en détail par la suite.

Les cellules sont reliées en série par le biais de leurs bornes électriques et forment un ensemble de stockage comportant une enveloppe 10 également parallélépipédique dans laquelle sont placées les cellules. Cette structure générale est également connue de l'homme de l'art.

Selon le mode de réalisation illustré sur la figure 1, l'enveloppe rigide comprend deux demi-coquilles 100A et 100B. Les deux demi-coquilles peuvent être symétriques. L'une de ces demi-coquilles, la demi-coquille inférieure 100A (également appelée première partie) est illustrée plus précisément sur la figure 1. Chaque demi-coquille 100 comprend l'une des parois 110, supérieure ou inférieure, de l'enveloppe et une portion de chacune des parois latérales 120. Les parois 110 sont de préférence de contour rectangulaire. Chaque portion de paroi latérale 120 peut par exemple couvrir la moitié de la hauteur de l'enveloppe à l'état assemblé. Les demi-coquilles 100 sont fixées entre elles par tous moyens appropriés, par exemple à l'aide de moyens de vissage ou des goujons engagés dans des orifices de fixation 122 formés au sommet des parois latérales 120 et destinés à être situés en vis-à-vis d'orifices complémentaires 123 de l'autre demi-coquille 100B (également appelée deuxième partie). L'enveloppe comprend également de préférence des ailettes 124 s'étendant à l'extrémité libre ou sommet de deux des parois latérales 120, typiquement deux parois latérales 120 opposées, perpendiculairement à ces parois et vers l'extérieur de ces parois latérales 120 (et parallèlement à la paroi inférieure 110A). Les ailettes 124 comportent des orifices 125 pour la fixation de l'ensemble à son environnement, par exemple à un véhicule.

L'enveloppe peut être formée par assemblage de deux demi-coquilles 100 telles qu'illustrées sur la figure 1.

Les cellules 1 sont destinées à être disposées côte à côte dans une telle enveloppe 10, de sorte que leurs directions longitudinales respectives soient parallèles, avec de préférence leurs bornes de sortie du même côté, de façon à faciliter leur liaison électrique.

On va maintenant préciser un premier mode de réalisation conforme à la présente invention en regard des figures 1 à 5.

Selon ce premier mode de réalisation la paroi inférieure 110A , qui est considérée ici comme la paroi de référence de l'ensemble, comprend des rails 112 s'étendant parallèlement à deux des parois latérales 120, par exemple perpendiculairement aux parois latérales 120 portant les ailettes 124, et parallèlement entre eux, essentiellement selon toute la dimension correspondante de la paroi inférieure 110A. Les rails 112 marquent la délimitation entre les emplacements prévus pour chacune des cellules 1. Chacun de ces rails 112 comprend notamment une paroi plane et rectiligne 114 s'étendant en saillie sur la paroi inférieure 110A, essentiellement perpendiculairement à celle-ci.

Chaque rail 112 est destiné à accueillir deux plots 200 en élastomère au voisinage de chacune des extrémités du rail. Chaque plot 200 forme une butée.

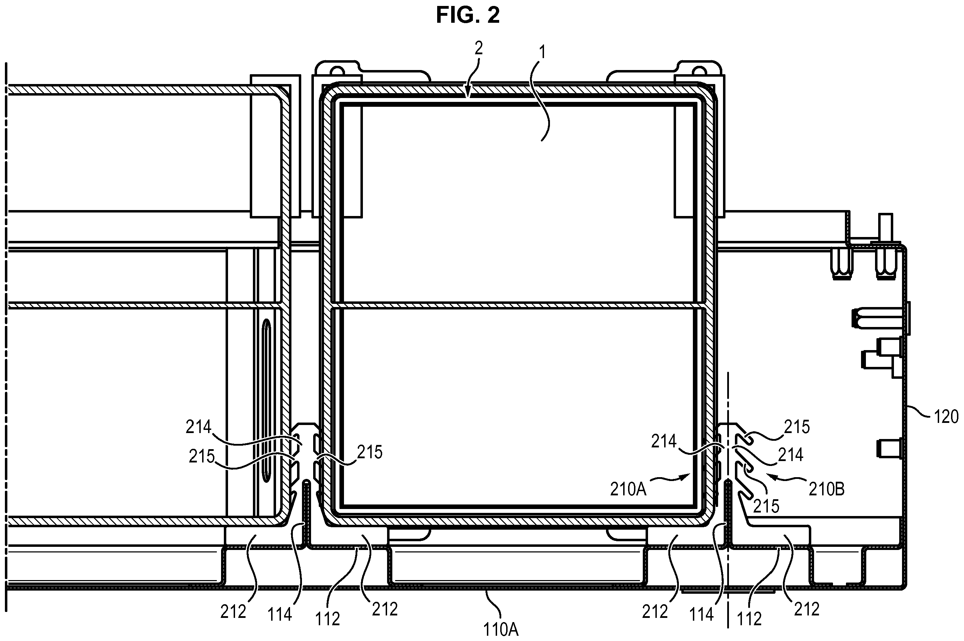

Selon le mode de réalisation particulier illustré sur les figures 1 et 2, chaque plot 200 comporte deux parties 210A, 210B destinées respectivement à s'étendre de chaque côté de la paroi 114 en saillie du rail 112. Ces parties 210A, 210B sont symétriques relativement à la paroi 114 du rail 112. Chaque partie 210A et 210B a une forme générale en L. Les deux parties 210A et 210B sont reliées par leur sommet. Ainsi chaque partie 210A et 210B comporte une première aile 212 essentiellement parallèle à la paroi inférieure 110A et en contact avec celle-ci et une deuxième aile 214, perpendiculaire à l'aile 212 et parallèle à la paroi 114 du rail 112 et en contact avec celle-ci. Les deux parties 210A, 210B sont reliées au niveau de l'extrémité supérieure de leur deuxième aile 214. Elles sont en effet d'un seul tenant à cet endroit. Le plot 200 comporte cependant une lumière entre les deux ailes 214, sous son sommet, pour permettre d'engager chaque plot 200 sur la paroi 114 du rail 112. Chacun des plots 200 est susceptible d'être en contact avec deux cellules 1 distinctes (à l'exception des plots 200 se trouvant sur les rails extrêmes, situés les plus proches des parois latérales de l'enveloppe, comme ceux illustrés sur la droite de la figure 2), les parties 210A, 210B étant respectivement en contact avec l'une des deux cellules 1.

La deuxième aile 214 de chacune des parties 210A et 210B de chaque plot 200 comporte des formes anti-retour, à savoir des picots ou des lèvres 215 s'étendant en saillie sur la deuxième aile 214 et dirigées de façon à être inclinées vers la première aile 212 et, de fait, vers la paroi inférieure 110A de l'enveloppe 10. Ces formes 215 peuvent éventuellement coopérer avec des formes en relief formées sur le boîtier des cellules (évidements en creux ou ailettes en saillie) et permettent une meilleure tenue de chaque cellule 1 dans l'ensemble.

Dans le mode de réalisation représenté sur la figure 2, le boîtier des cellules ne comporte pas de formes particulières complémentaires des lèvres 215. Le maintien de chaque cellule 1 est uniquement assuré du fait des frottements entre le boîtier et les lèvres 215. En effet, du fait de l'inclinaison vers la première aile 212 des lèvres 215 des plots 200, on peut facilement plier ces lèvres lorsque l'on glisse les cellules dans l'enveloppe 10 du haut vers le bas. En d'autres termes les lèvres 215 s'effacent lorsque l'on engage les cellules dans l'enveloppe 10. Il est toutefois plus difficile de déplacer les cellules 1 vers le haut, une fois leur mise en place achevée, car les lèvres 215 sont précontraintes de façon à ce qu'elle s'opposent au retrait de la cellule 1. On maintient ainsi efficacement les cellules au niveau de la paroi inférieure 110A de l'enveloppe 10. De plus, les ailes verticales 214 des plots 200, placées entre chaque paire de cellules adjacentes 1, permettent d'empêcher que les cellules 1 ne s'entrechoquent entre elles lorsqu'elles sont soumises à des vibrations telles que celles provoquées par un véhicule en condition de roulage. Les ailes horizontales 212 permettent d'éviter les contacts destructeurs entre la paroi inférieure 110A et les cellules 1 en condition d'utilisation du véhicule. La butée 200 est réalisée avantageusement en EPDM ce qui permet de lui conférer une certaine élasticité et également de découpler thermiquement chaque cellule 1 des autres éléments de l'ensemble et notamment de l'enveloppe 10, ce matériau étant thermiquement isolant.

Comme on le voit sur la figure 1, l'enveloppe 10 et notamment les parois latérales 120 de celle-ci comprennent également de préférence des moyens 130 de renforcement de l'enveloppe. Ces moyens de renforcement 130 comprennent notamment des blocs 132 situés sur les parois latérales 120 s'étendant dans la même direction que les rails 112, essentiellement au milieu de ces parois 120 (un seul bloc 132 est visible sur la figure 1). Ces blocs 132 sont par exemple formés de tôles rapportées sur les parois latérales 120. Chacune de ces tôles 132 présente une paroi centrale 133, essentiellement parallèle à la paroi latérale 120 de l'enveloppe sur laquelle elle est fixée et espacée de celle-ci, ainsi que deux ailettes de fixation 135 situées de chaque côté de la paroi centrale 133 de ladite tôle 132 et plaquées contre la paroi latérale 120 de l'enveloppe 10. La tôle 132 comprend également deux parois inclinées 134 reliant respectivement une ailette de fixation 135 à la paroi centrale 133.

Les moyens de renforcement 130 comprennent également de préférence des blocs 136 rapportés sur les parois latérales 120 perpendiculaires aux rails 112. L'une des parois latérales 120 perpendiculaires aux rails 112 comprend de ce fait une pluralité de blocs 136 formés par exemple de tôles rapportées sur cette paroi 120, une tôle 136 étant rapportée sur la paroi 120 plus particulièrement au niveau de chacun des rails 112. Chaque bloc 136 a essentiellement la même forme que les blocs 132 et comporte par conséquent une paroi centrale 167 espacé de la paroi latérale 120..

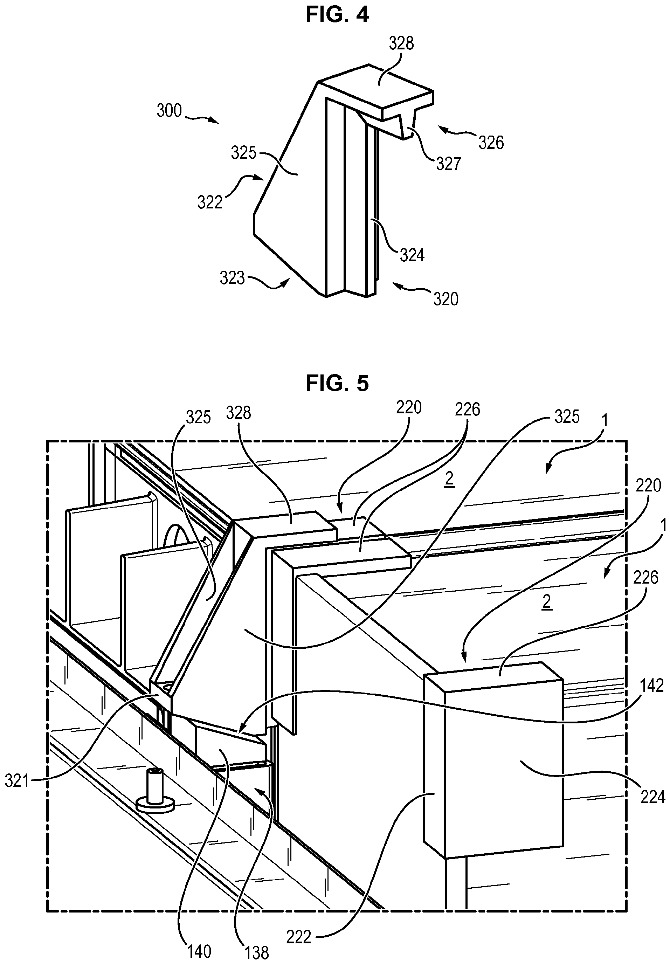

Les moyens de renforcement 130 comprennent également de préférence des piliers 138 en saillie de la paroi latérale 120 opposée à celle comportant les blocs 136, en vis-à-vis relativement auxdits blocs 136 et au niveau de chaque rail 112 donc, comme illustré sur la figure 5..

En synthèse les moyens de renforcement 130 prévus selon le mode de réalisation représenté sur les figures 1 à 5 comprennent de préférence des blocs 132 en saillie sur deux faces parallèles opposées 120 de l'enveloppe, avantageusement sur les deux faces 120 parallèles aux rails 112 et respectivement des blocs 136 et des piliers 138 sur les deux autres faces 120 orthogonales aux rails 112. Les moyens de renforcement 136, 138 pourraient également faire office de moyens de positionnement pour les butées 200.

Comme on le voit sur les figures 4 et 5, de préférence des plots élastomères 220 sont également placés à l'extrémité supérieure des cellules 1, notamment à chaque coin des cellules 1. Ces plots 220 sont associés à des moyens de plaquage 300. Le cas échéant les moyens de plaquage 300 adjacents aux deux faces opposées 120 de l'enveloppe situées en vis-à-vis des rails 112, peuvent être identiques.

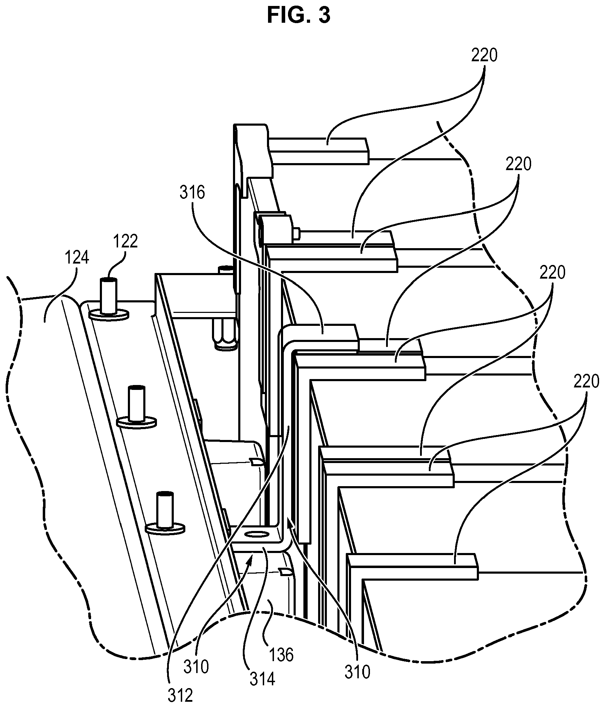

Cependant selon le mode de réalisation illustré les moyens de plaquage 300 prévus respectivement à proximité de ces deux faces 120 sont de géométries différentes et sont illustrés en position respectivement sur les figures 3 et 5. Les moyens de plaquage pourraient toutefois bien entendu être de même géométrie dans tout l'ensemble.

Les plots précités 220 sont de forme complémentaire au coin du boîtier de chaque cellule 1. Ils comprennent trois parois 222, 224, 226 perpendiculaires entre elles et agencées en coin de cube, destinées chacune à longer l'une des parois du boîtier au voisinage de son coin. De tels plots 220 permettent d'éviter que les cellules 1 ne s'entrechoquent en partie supérieure et qu'elles ne soient en contact destructeur avec les parois de l'enveloppe 10, notamment la paroi supérieure 110B.

Comme indiqué précédemment l'ensemble comprend également des moyens 300 de plaquage pour caler les cellules 1 munies des plots 200, 220 contre la paroi inférieure 110A et maintenir les plots 220 sur les cellules 1.

Ces moyens 300 peuvent comprendre des leviers d'appui 310 illustrés sur la figure 3, comprenant un bras central 312 et deux bras d'extrémité 314 et 316 s'étendant chacun à une extrémité du bras central 312 et dans des directions opposées l'un de l'autre. Un tel levier 310 est ainsi fixé de façon amovible, par exemple par vissage, sur la face supérieure des blocs de renforcement 136 par un premier bras d'extrémité 314 et est configuré de sorte que l'autre bras d'extrémité 316 soit en appui contre les faces supérieures 226 des plots 220 placés sur deux coins adjacents de deux cellules 1 adjacentes, maintenant ainsi les plots 220 en place sur les cellules 1 et plaquant également les cellules 1 contre la paroi inférieure 110A.

Au niveau de la paroi latérale 120 opposée, l'ensemble comprend également des moyens de plaquage 300. Ces moyens 300 comprennent un élément en L 320 placé sur un socle 140 disposé en partie supérieure de chaque pilier 138. Chaque socle 140 comprend une face supérieure 142 inclinée d'une pente déterminée relativement à la paroi inférieure 110A de l'enveloppe. L'élément en L 320 comprend deux bras 322, 326 essentiellement perpendiculaires entre eux. Le bras principal 322 (ou bras le plus long) présente une surface d'extrémité inférieure 323 avec une pente complémentaire de celle de la face supérieure 142 du socle 140 à son extrémité libre. Cette extrémité 323 du bras 322 est destinée à se positionner sur la face inclinée 142 du socle 140. Le deuxième bras 326 est destiné à être en appui contre la face supérieure des cellules 1 et contre les plots 220, afin de maintenir lesdits plots 220 sur les cellules respectives 1 et de plaquer les cellules 1 sur la paroi inférieure 110A de l'enveloppe 10. La section de ce bras 326 est une section en T comprenant une branche horizontale 328 et une branche verticale 327. La largeur de la branche verticale 327 du T diminue à mesure que la branche verticale du T 327 s'éloigne de la branche horizontale 328, comme on le voit sur la figure 4, ce qui permet un meilleur calage des cellules 1 quelles que soient leurs tolérances de fabrication, la branche verticale 327 du T étant orientée vers l'intérieur de l'ensemble. En outre, le bras principal 322 comporte la même forme de section que le bras 326, c'est-à-dire comporte une nervure longitudinale 324 formant la branche verticale d'un T orientée aussi vers l'intérieur de l'ensemble. Cette nervure 324, comme la branche verticale 327 est destinée à être placée entre une paire de cellules 1 adjacentes. Comme le levier 310, cet élément en L 320 permet de maintenir deux cellules 1 adjacentes au niveau de leurs extrémités transversales adjacentes respectives.

On notera que l'élément en L 320 peut être fixé en plusieurs positions relativement au socle 140 grâce à des moyens de fixation glissants classiques, bien entendu amovibles. Une telle fixation peut être une fixation par vissage par exemple dans un orifice oblong formé dans une semelle 321 liée au bras principal 322. Selon la réalisation particulière illustrée sur la figure 5 cette semelle 321 s'étend sur l'extrémité du bras principal 322 opposée au bras 326 et sur le côté opposé à ce dernier. La semelle 321 est liée aux côtés longitudinaux du bras principal 322 par des ailettes latérales 325 parallèles en triangle visibles sur la figure 4.

On peut donc positionner l'élément en L 320 par rapport au socle 140 en plusieurs positions de sorte que le bras 326 peut prendre plusieurs hauteurs relativement au socle 140 et donc à la paroi inférieure 110A. L'élément en L 320 peut donc prendre la hauteur la plus adaptée aux cellules 1 qu'il doit plaquer contre la paroi inférieure 110A, en fonction des tolérances de fabrication des cellules.

Ainsi, lorsque l'on souhaite monter l'ensemble, on place tout d'abord les plots déformables 200 sur les rails 112 de la paroi inférieure 110A, puis on place chacune des cellules 1 à l'emplacement prévu à cet effet. Un plot 200 est situé entre chaque paire de cellules 1 adjacentes.

On met ensuite en place les plots 220 au niveau des coins supérieurs de chaque cellule 1 et on fixe les différents moyens de plaquage 310 et 320 sur la demi-coquille inférieure 100A de sorte que ces moyens de plaquage 310 et 320 sollicitent la surface supérieure 2 des cellules 1 et plaquent lesdites cellules sur la paroi inférieure de l'enveloppe. On rapporte ensuite la demi-coquille supérieure 100B de design plus simple, sur la demi-coquille inférieure 100A.

Le procédé de montage comprend des étapes de mise en place des rails 112, des blocs de renforcement 132, 136 et 138 sur la demi-coquille inférieure 100A avant les étapes décrites ci-dessus, si ces éléments 112, 132, 136 et 138 ne sont pas formés d'une seule pièce avec les parois de l'enveloppe.

Lorsque l'on souhaite démonter un ensemble, il suffit d'enlever la demi-coquille supérieure 100B et de dévisser les leviers 310 représentés sur la figure 3 et les éléments en L 320 illustrés sur la figure 5 correspondants à la cellule 1 considérée comme défectueuse (4 éléments à dévisser en tout).

L'ensemble selon l'invention permet donc une bonne démontabilité et un bon maintien des cellules 1 dans l'enveloppe 10 tout en garantissant que l'ensemble peut fonctionner dans les conditions normales de roulage du véhicule (notamment malgré les vibrations subies).

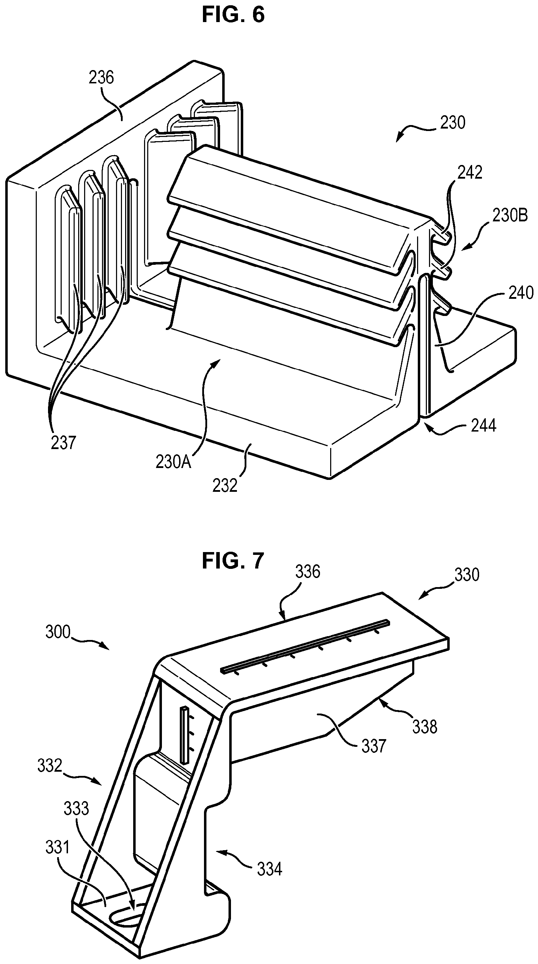

On va maintenant décrire un deuxième mode de réalisation conforme à la présente invention en regard des figures 6 à 8.

Plus précisément on va maintenant décrire notamment une butée 230 en regard de la figure 6 et son système 330 de fixation ou plaquage sur l'enveloppe en regard de la figure 7, le reste de l'ensemble pouvant être identique à ce qui a été décrit précédemment en regard des figures 1 à 5.

Dans ce mode de réalisation, tous les plots 230 formant butée sont identiques, qu'ils soient placés en partie inférieure ou en partie supérieure des cellules.

Comme les plots 200 décrits dans le mode de réalisation précédent de l'invention, les plots 230 peuvent être emmanchés sur un rail 112 (en partie inférieure de l'enveloppe 10).

Les plots 230 comprennent une première paroi commune 232, une deuxième paroi commune 236 orthogonale à la première 232 et une paroi centrale 240, dite paroi principale, orthogonale à la fois aux parois 232, 236 et qui raccorde celles-ci à mi largeur, au niveau de la concavité formée entre ces parois.

Les parois communes longent chacune une paroi de l'enveloppe (respectivement la paroi inférieure 110A pour la première paroi commune 232 et une paroi latérale 120 pour la deuxième paroi commune 236) et également les parois correspondantes de chacune des cellules. La paroi centrale 240 est quant à elle destinée à s'étendre entre les cellules.

Les plots 230 présentent ainsi un plan de symétrie qui passe par la mi-épaisseur de la paroi centrale 240.

Les plots 230 comportent ainsi deux parties 230A, 230B concaves en coin de cube situées de part et d'autre de cette paroi centrale 240 et symétriques relativement à celle-ci.

Les parties 230A, 230B sont destinées à être respectivement en contact avec le coin d'une des cellules 1 appartenant à une paire de cellules 1 adjacentes.

La paroi inférieure horizontale 232 est destinée à s'étendre entre chaque cellule 1 et la paroi inférieure 110A de l'enveloppe 10 et la paroi verticale 236 est destinée à s'étendre entre chaque cellule 1 et la paroi latérale 120 de l'enveloppe 10. Chacune des parois 232 et 236 s'étend de part et d'autre de la paroi centrale 240.

La paroi centrale 240 est pourvue d'ailettes 242 en saillie essentiellement parallèles entre elles et inclinées en direction de la paroi 232 comme déjà montré dans la figure 1. La paroi 236 est également pourvue d'ailettes 237 en saillie essentiellement parallèles entre elles et inclinées en direction de la paroi centrale 240. Ces ailettes 242, respectivement 237, qui sont censées être compressées en se déformant contre la paroi 240, respectivement 236, lorsque une cellule 1 est insérée dans l'enveloppe 10 permettent un calage de chaque cellule 1 quelle que soit sa dimension selon les directions normales au parois 140 et 236, les ailettes 242, 237 se déformant plus ou moins et se rabattant plus ou moins vers leur paroi respective 240, 236 en fonction des dimensions de la cellule 1. Chaque cellule 1 est également maintenue en place du fait des frottements des ailettes (équivalentes aux formes anti-retour 215 décrites dans le mode de réalisation précédent).

On remarque également que les ailettes 237 permettent de caler chaque cellule 1 selon une dimension perpendiculaire à celle des ailettes 237, même si des variations dimensionnelles sont constatées selon cette direction.

Comme on l'a indiqué, ces plots 230 sont mis en place en partie inférieure de l'ensemble par coopération de forme avec un rail 112 tel que représenté sur la figure 1 et inséré comme déjà indiqué dans la figure 2 dans un orifice 244 de la butée situé à mi-épaisseur de la paroi centrale 240. Le rail peut aussi faire l'objet de nombreux modes de réalisation. De préférence le rail 118 ne s'étend pas sur toute la dimension de l'ensemble mais est de forme complémentaire de la paroi 232, ayant donc la même dimension longitudinale que l'orifice.

En partie supérieure, l'ensemble comprend également des pièces de plaquage 330 remplaçant les leviers 310 et les éléments en L 320 du mode de réalisation précédent.

La pièce 330 a également une forme générale de L formée de deux parois principales 332 et 336 globalement orthogonales entres elles. La paroi 332 est essentiellement parallèle à une paroi latérale 120 de l'enveloppe 10 à l'utilisation. La paroi 336 est essentiellement parallèle à une paroi supérieure de l'enveloppe 10 à l'utilisation.

La paroi 332 est munie à son extrémité inférieure opposée à la paroi 336, d'une ailette ou semelle de fixation 331, essentiellement perpendiculaire à la paroi 332, et destinée à être placée à l'extrémité d'un bloc tel que 136 de l'enveloppe 10. Les variations de hauteur peuvent être gérées dans cette configuration à l'aide des ailettes 242 de la butée. La semelle 331 pourrait toutefois en variante être oblique comme présenté auparavant à la figure 4. Cette ailette 331 comporte un trou oblong 333 pour la fixation de la pièce 330 au bloc 136, de sorte que la pièce 330 peut prendre plusieurs positions relativement au pilier 138 en fonction des dimensions de la cellule 1 selon la direction normale à la paroi 332.

On constate également sur la figure 7 que la paroi 332 comporte un évidement 334 dirigé vers l'intérieur de la concavité de la pièce 330, qui peut permettre si besoin le passage d'un moyen de connexion électrique tel qu'un câblage.

Comme l'élément en L 320 précédemment, cette pièce 330 comporte une nervure médiane 337 sur la face interne de sa paroi 336. La nervure 337 est destinée à être placée entre deux cellules 1 adjacentes, à la verticale du rail de la paroi inférieure 110A. La nervure 337, sur laquelle est fixé le plot 230, présente un chanfrein 338 à l'extrémité opposée à la paroi 334.

La nervure 337 peut être rapportée par clipsage sur la pièce 330, comme illustré sur la figure 7. Elle peut également être d'un seul tenant avec celle-ci.

Bien entendu la présente invention n'est pas limitée aux modes de réalisation précédemment décrits mais s'étend à toutes variantes conformes à son esprit.

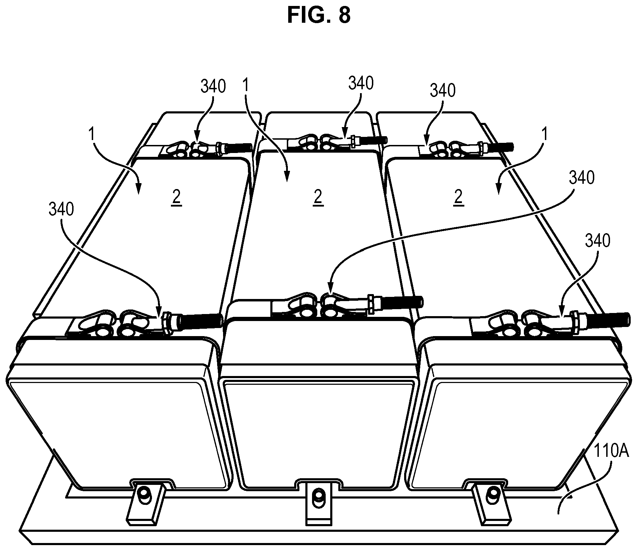

On notera en particulier que l'ensemble selon l'invention et le procédé d'assemblage ne sont pas limités à ce qui a été décrit ci-dessus, notamment :
- Les blocs de positionnement 132 et 136 sont optionnels de même que les plots supérieurs 220,
- Les plots ou butées 200, 220, 230 ne sont pas limités aux formes décrites. En outre, les butées 200, 220, 230 décrites peuvent prendre place à d'autres endroits de l'ensemble, notamment en partie supérieure de celui-ci,
- la butée peut par exemple comprendre au moins une paroi commune longeant une paroi de l'enveloppe sur toute sa dimension et également une pluralité de parois en saillie de la ou des parois communes, ces parois étant destinées à former des parois principales s'étendant entre chaque paire de cellules adjacentes. La butée présente dans ce mode de réalisation en réalité une forme de peigne,
- Les plots 200, 220, 230 peuvent être moulés avec (notamment surmoulés sur) l'une des parois 110 ou 120 de l'ensemble,
- Un seul plot 200, 220, 230 peut s'étendre entre deux cellules 1 adjacentes,
- Les moyens de plaquage 300 peuvent être tous identiques (un seul type de pièce, élément en L 320 ou 330 ou levier 310) pour un même mode de réalisation,
- En particulier, dans la conception du premier mode de réalisation illustré sur les figures 1 à 5, l'enveloppe 10 peut comprendre des piliers 138 identiques sur tout son pourtour, les pièces 300 formant moyens de plaquage pouvant également être d'un seul type,
- Les moyens de plaquage 300 peuvent être constitués par la paroi supérieure 110B plaquée contre la face supérieure des cellules 1,
- Les moyens de plaquage 300 peuvent être constitués par un ou des cerclages 340 formés par deux brins dont une extrémité liée est reliée à la paroi inférieure et destinés à coopérer au voisinage de leur extrémité libre de façon à entourer au moins une cellule, de préférence chacune des cellules 1 séparément, comme schématisé sur la figure 8,
- Un même moyen de plaquage 300 peut plaquer toutes les cellules 1 contre la paroi inférieure 110A (sous forme d'une traverse de maintien par exemple),
- La forme de l'enveloppe 10 n'est pas limitée à deux demi-coquilles 100 comme illustré sur la figure 1,
- L'enveloppe peut être aménagée de sorte que la paroi par laquelle on sort les cellules déficientes 1 hors de l'enveloppe n'est pas la paroi supérieure, mais une autre paroi. Dans ce cas, la paroi de référence pourrait être une autre paroi que la paroi inférieure.

## Revendications

1. Ensemble de stockage d'énergie électrique comprenant :
- une pluralité de cellules (1) de stockage d'énergie de forme parallélépipédique disposées côte à côte, et
- une enveloppe rigide (10) entourant ces cellules (1), l'enveloppe (10) comprenant au moins deux parties distinctes (100A, 100B), une première partie de l'enveloppe comportant au moins une paroi de référence, notamment constituée par une paroi inférieure, (110A),
- au moins une butée (200, 220, 230) réalisée en un matériau déformable élastiquement qui comprend au moins une paroi dite principale (214, 224, 240), s'étendant selon un plan essentiellement normal à la paroi de référence (110A) et qui est positionnée entre deux des cellules (1), de sorte qu'au moins une butée (200, 220, 230) est placée entre chaque paire de cellules adjacentes (1), et
- des moyens de plaquage (300) destinés à appuyer sur une face de chacune des cellules (1) afin de plaquer chaque cellule (1) contre la paroi de référence (110A), les moyens de plaquage (300) étant fixés de façon amovible à la première partie (100A) de l'enveloppe (10), **caractérisé en ce qu'**au moins l'une des butées (200, 220, 230) comprend plusieurs ailettes (237) parallèles s'étendant en saillie d'une paroi de la butée et destinées à coopérer avec une paroi de la cellule afin de compenser les tolérances de fabrication des cellules (1).

2. Ensemble de stockage d'énergie selon la revendication précédente, dans lequel au moins deux butées (200, 220) s'étendent entre chaque paire de cellules, respectivement au voisinage de la paroi de référence (110A) et d'une paroi opposée à la paroi de référence (110B), constituée notamment par la paroi supérieure.

3. Ensemble de stockage d'énergie électrique selon l'une des revendications précédentes, **caractérisé en ce que** au moins une dimension desdites butées (200, 220, 230) est inférieure à la dimension de la paroi associée de la cellule (1).

4. Ensemble de stockage d'énergie électrique selon l'une des revendications précédentes, **caractérisé en ce que** l'une au moins des butées (200, 220, 230) comprend au moins deux parois (212, 214 ; 222, 224, 226 ; 232, 236, 240) perpendiculaires entre elles qui longent deux parois respectives d'au moins une cellule (1).

5. Ensemble de stockage d'énergie électrique selon la revendication précédente, **caractérisé en ce que** la disposition d'au moins l'une des parois (212 ; 222, 226 ; 232, 236) de la butée est choisie pour que ladite paroi soit positionnée, soit entre les cellules (1) et une paroi de l'enveloppe parallèle à la paroi de référence (110A) de l'enveloppe (10), soit perpendiculairement à la paroi de référence (110A) et la paroi principale (214 ; 224; 240) de la butée.

6. Ensemble de stockage d'énergie électrique selon l'une des revendications 4 et 5, **caractérisé en ce qu'**au moins l'une des butées (200, 220, 230) comprend une paroi s'étendant entre la paroi (110B) de l'enveloppe (10) opposée à la paroi de référence et au moins l'une des cellules (1), de préférence entre les moyens de plaquage (300) et ladite ou lesdites cellules (1).

7. Ensemble de stockage d'énergie électrique selon l'une des revendications 4 à 6, **caractérisé en ce que** l'une au moins des butées (200, 220, 230) comprend au moins trois parois (222, 224, 226 ; 232, 236, 240) orthogonales entre elles longeant trois parois distinctes d'au moins une cellule de stockage d'énergie (1) agencées de façon à former un coin de cube entourant un coin de la cellule.

8. Ensemble de stockage d'énergie électrique selon la revendication précédente, **caractérisé en ce qu'**il comprend une pluralité de butées (222, 224, 226 ; 232, 236, 240) en forme de coin de cube, associées chacune à un coin respectif de chaque cellule (1) adjacent à la paroi de référence (110A) et/ou à la paroi (110B) opposée à la paroi de référence de l'enveloppe (10).

9. Ensemble de stockage d'énergie électrique selon l'une des revendications précédentes, **caractérisé en ce qu'**une butée (200, 220, 230) d'un seul tenant est associée à des cellules (1) différentes, la butée comportant notamment au moins une paroi commune (232, 236) longeant une paroi de l'enveloppe (110A, 120) et les parois d'au moins deux cellules adjacentes, en s'étendant éventuellement tout le long de la paroi de l'enveloppe (10), et comprenant au moins une paroi (240) s'étendant en saillie de la paroi commune, la ou l'au moins une des parois en saillie formant une paroi principale s'étendant entre deux cellules adjacentes.

10. Ensemble de stockage d'énergie électrique selon la revendication précédente, **caractérisé en ce qu'**il comprend au moins une butée (230) qui comprend une première paroi commune (232), une deuxième paroi commune (236) orthogonale à la première paroi commune (232) et une paroi centrale (240) formant paroi principale, orthogonale aux deux parois communes (236) et qui raccorde celles-ci, au niveau de la concavité des deux parois communes (232, 236), de façon à former deux parties (230A, 230B) concaves en coin de cube situées de part et d'autre de la paroi principale (240) et notamment symétriques relativement à celle-ci.

11. Ensemble de stockage d'énergie électrique selon l'une des revendications précédentes, **caractérisé en ce que** l'enveloppe (10) comprend sur une de ses parois, notamment la paroi de référence (110) ou la paroi opposée à la paroi de référence, au moins un rail (112) assurant le positionnement d'au moins une butée (200, 220, 230).

12. Ensemble de stockage d'énergie électrique selon la revendication précédente, **caractérisé en ce qu'**il comprend au moins une butée (200) en forme de plot (200) qui comporte deux parties (210A, 210B) symétriques en forme de L et reliées par leur sommet tout en ménageant une lumière entre deux ailes (214), sous ce sommet, pour permettre d'engager ce plot (200) sur un rail (112) de l'enveloppe, les deux ailes étant destinées à former la paroi principale de la butée en étant placées entre deux cellules adjacentes.

13. Ensemble de stockage d'énergie électrique selon l'une des revendications précédentes, **caractérisé en ce que** au moins une butée (200, 220, 230) est réalisée dans un matériau thermiquement isolant, notamment un élastomère, tel qu'un caoutchouc, un matériau alvéolaire non métallique, un thermoplastique ou un EPDM.

14. Ensemble de stockage d'énergie électrique selon l'une des revendications précédentes, **caractérisé en ce que** au moins l'une des butées (200, 220, 230) est d'un seul tenant avec l'une des parois (110, 120) de l'enveloppe (10) ou rapportée sur l'une de ces parois (110, 120), voire rapportée sur une cellule (1) directement.

15. Ensemble de stockage d'énergie électrique selon l'une des revendications précédentes, **caractérisé en ce que** au moins l'une des butées (200, 220, 230) comprend une ou plusieurs formes anti-retour (215, 242) s'étendant en saillie d'au moins une des parois de ladite butée, notamment de la paroi principale (214, 240) destinée à être placée entre les cellules (1).

16. Ensemble de stockage d'énergie électrique selon l'une des revendications précédentes, dans lequel les moyens de fixation amovibles associés aux moyens de plaquage (300) sont situés de sorte qu'ils sont plus proches de la paroi opposée à la paroi de référence que de la paroi de référence.

17. Ensemble de stockage d'énergie électrique selon l'une quelconque des revendications précédentes, **caractérisé en ce que** la paroi opposée à la paroi de référence (110B) de l'enveloppe fait office de moyen de plaquage (300).

18. Ensemble de stockage d'énergie électrique selon l'une des revendications précédentes, **caractérisé en ce que** au moins l'un des moyens de plaquage (300) est configuré pour appuyer sur au maximum deux cellules (1).

19. Ensemble de stockage d'énergie électrique selon la revendication précédente, **caractérisé en ce que** les moyens de plaquage (300) comportent un élément en L (310, 320, 330) destiné à être fixé à l'enveloppe (10), notamment à la première partie de l'enveloppe, et à appuyer sur une face (2) d'au moins une cellule destinée à longer la paroi opposée à la paroi de référence (1), notamment à l'interface de deux cellules (1).

20. Ensemble de stockage d'énergie électrique selon la revendication précédente, **caractérisé en ce qu'**il comprend un socle (140) solidaire de la paroi de référence (110A) de l'enveloppe et présentant une surface (142) inclinée de sorte que ledit élément en L (320, 330) peut prendre plusieurs positions relativement à ce socle, de sorte que la position de l'élément en L (320, 330) peut varier en fonction de la configuration des cellules (1).

21. Ensemble de stockage d'énergie électrique selon l'une des revendications précédentes, **caractérisé en ce que** les moyens de plaquage (300) comprennent un cerclage (340) formé par deux brins dont une extrémité liée est reliée à la paroi de référence (110A) et destinés à coopérer au voisinage de leur extrémité libre de façon à entourer au moins une cellule (1).

22. Procédé d'assemblage d'un ensemble de stockage d'énergie électrique comportant une pluralité de cellules de stockage d'énergie de forme parallélépipédique disposées côte à côte et une enveloppe rigide destinée à entourer ces cellules, comportant deux partie distinctes, une première partie de l'enveloppe comportant une paroi de référence, notamment constituée par une paroi inférieure,
le procédé comprenant les étapes suivantes :
- sur la paroi de référence (110), de l'ensemble sur laquelle sont agencées une pluralité de butées élastiquement déformables (200 ; 220 ; 230), mise en place des cellules (1) de sorte qu'au moins une butée (200 ; 220 ; 230) soit intercalée entre chaque paire de cellules adjacentes (1),
- mise en place de moyens de plaquage (300) configurés pour appuyer contre les cellules (1) afin de les plaquer contre la paroi de référence (110) de l'enveloppe (10) de sorte que ces moyens (300) soient fixés de façon amovible relativement à la première partie de l'enveloppe comportant la paroi de référence (110A), dans lequel l'une des butées (200, 220, 230) comprend plusieurs ailettes (237) parallèles s'étendant en saillie d'une paroi de la butée et destinées à coopérer avec une paroi de la cellule afin de compenser les tolérances de fabrication des cellules (1).

23. Procédé selon la revendication précédente, **caractérisé en ce qu'**il comporte une étape préalable de mise en place de butées déformables (200, 220, 230) sur la paroi de référence (110A) à des emplacements prédéterminés de ladite paroi (110).

24. Procédé selon l'une des revendications 22 ou 23, **caractérisé en ce que** des butées déformables supplémentaires (200, 220, 230) sont mises en place sur les cellules (1), de sorte que lesdites butées déformables (200, 220, 230) soient intercalées entre deux cellules (1) au voisinage de la paroi opposée à la paroi de référence et/ou entre au moins l'une des cellules et la paroi opposée à la paroi de référence de l'enveloppe, avant la fixation des moyens de plaquage (300).

## Patentansprüche

1. Speichereinheit elektrischer Energie, umfassend:
- eine Vielzahl von nebeneinander angeordneten parallelepipedischen Energiespeicherzellen (1), und
- einen festen Mantel (10), der diese Zellen (1) umgibt, wobei der Mantel (10) mindestens zwei unterschiedliche Teile (100A, 100B) umfasst, wobei ein erster Teil des Mantels mindestens eine Bezugswand, die insbesondere von einer unteren Wand gebildet ist, (110A), umfasst:
- mindestens einen Anschlag (200, 220, 230), hergestellt aus einem elastisch verformbaren Material, der mindestens eine Hauptwand (214, 224, 240) umfasst, die sich in einer zu der Bezugswand (110A) im wesentlichen senkrechten Ebene erstreckt und der zwischen zwei der Zellen (1) derart positioniert ist, dass mindestens ein Anschlag (200, 220, 230) zwischen jedem Paar benachbarter Zellen (1) platziert ist, und
- Andruckmittel (300), die bestimmt sind, auf eine Fläche jeder der Zellen (1) zu drücken, um jede Zelle (1) gegen die Bezugswand (110A) zu drücken, wobei die Andruckmittel (300) lösbar am ersten Teil (100A) des Mantels (10) befestigt sind, **dadurch gekennzeichnet, dass** mindestens einer der Anschläge (200, 220, 230) mehrere parallele Flügel (237) umfasst, die sich von einer Wand des Anschlags hervorstehend erstrecken und bestimmt sind, mit einer Wand der Zelle zusammenzuwirken, um die Herstellungstoleranzen der Zellen (1) auszugleichen.

2. Energiespeichereinheit nach vorangehendem Anspruch, wobei sich mindestens zwei Anschläge (200, 220) zwischen jedem Zellenpaar jeweils in der Nähe der Bezugswand (110A) und einer der Bezugswand (110B) gegenüberliegenden Wand, die insbesondere von der oberen Wand gebildet ist, erstrecken.

3. Speichereinheit elektrischer Energie nach einem der vorangehenden Ansprüche, **dadurch gekennzeichnet, dass** mindestens eine Größe der Anschläge (200, 220, 230) kleiner als die Größe der zugeordneten Wand der Zelle (1) ist.

4. Speichereinheit elektrischer Energie nach einem der vorangehenden Ansprüche, **dadurch gekennzeichnet, dass** mindestens einer der Anschläge (200, 220, 230) mindestens zwei zueinander senkrechte Wände (212, 214; 222, 224, 226; 232, 236, 240) umfasst, die entlang von zwei jeweiligen Wänden mindestens einer Zelle (1) verlaufen.

5. Speichereinheit elektrischer Energie nach vorangehendem Anspruch, **dadurch gekennzeichnet, dass** die Anordnung mindestens einer der Wände (212; 222, 226; 232, 236) des Anschlags ausgewählt ist, damit die Wand entweder zwischen den Zellen (1) und einer zu der Bezugswand (110A) des Mantels (10) parallelen Wand des Mantels oder senkrecht zu der Bezugswand (110A) und zu der Hauptwand (214; 224; 240) des Anschlags positioniert ist.

6. Speichereinheit elektrischer Energie nach einem der Ansprüche 4 und 5, **dadurch gekennzeichnet, dass** mindestens einer der Anschläge (200, 220, 230) eine Wand umfasst, die sich zwischen der der Bezugswand gegenüberliegenden Wand (110B) des Mantels (10) und mindestens einer der Zellen (1), vorzugsweise zwischen den Andruckmitteln (300) und der oder den Zellen (1), erstreckt.

7. Speichereinheit elektrischer Energie nach einem der Ansprüche 4 bis 6, **dadurch gekennzeichnet, dass** mindestens einer der Anschläge (200, 220, 230) mindestens drei zueinander orthogonale Wände (222, 224, 226; 232, 236, 240) umfasst, die entlang von drei unterschiedlichen Wänden mindestens einer Energiespeicherzelle (1) verlaufen, die derart ausgebildet sind, dass sie eine Würfelecke bilden, die eine Zellenecke umgibt.

8. Speichereinheit elektrischer Energie nach vorangehendem Anspruch, **dadurch gekennzeichnet, dass** sie eine Vielzahl von würfeleckenförmigen Anschlägen (222, 224, 226; 232, 236, 240) umfasst, die jeder einer jeweiligen Ecke jeder zu der Bezugswand (110A) und/oder zu der der Bezugswand des Mantels (10) gegenüberliegenden Wand (110B) benachbarten Zelle (1) zugeordnet sind.

9. Speichereinheit elektrischer Energie nach einem der vorangehenden Ansprüche, **dadurch gekennzeichnet, dass** ein einstückiger Anschlag (200, 220, 230) unterschiedlichen Zellen (1) zugeordnet ist, wobei der Anschlag insbesondere mindestens eine gemeinsame Wand (232, 236) aufweist, die entlang einer Wand des Mantels (110A, 120) und der Wände von mindestens zwei benachbarten Zellen verläuft, indem sie sich eventuell über die gesamte Länge der Wand des Mantels (10) erstreckt, und mindestens eine Wand (240) umfasst, die über die gemeinsame Wand hervorsteht, wobei die oder mindestens eine der hervorstehenden Wände eine Hauptwand bildet, die sich zwischen zwei benachbarten Zellen erstreckt.

10. Speichereinheit elektrischer Energie nach vorangehendem Anspruch, **dadurch gekennzeichnet, dass** sie mindestens einen Anschlag (230) umfasst, der eine erste gemeinsame Wand (232), eine zweite gemeinsame Wand (236), die zu der ersten gemeinsamen Wand (232) orthogonal ist, und eine zentrale Wand (240), die die zu den zwei gemeinsamen Wänden (236) orthogonale Hauptwand bildet und die diese im Bereich der Konkavität der zwei gemeinsamen Wände (232, 236) derart verbindet, dass zwei konkave Würfeleckenteile (230A, 230B) gebildet werden, die sich beiderseits der Hauptwand (240) und insbesondere symmetrisch zu dieser befinden.

11. Speichereinheit elektrischer Energie nach einem der vorangehenden Ansprüche, **dadurch gekennzeichnet, dass** der Mantel (10) auf einer seiner Wände, insbesondere der Bezugswand (110) oder der der Bezugswand gegenüberliegenden Wand, mindestens eine Schiene (112) umfasst, die die Positionierung von mindestens einem Anschlag (200, 220, 230) sichert.

12. Speichereinheit elektrischer Energie nach vorangehendem Anspruch, **dadurch gekennzeichnet, dass** sie mindestens einen Anschlag (200) in Form eines Kontaktstücks (200) umfasst, das zwei symmetrische L-förmige Teile (210A, 210B) umfasst, die an ihrer Spitze verbunden sind und dabei einen Schlitz zwischen zwei Flügeln (214) unter dieser Spitze aussparen, um das Eingreifen dieses Kontaktstücks (200) auf einer Schiene (112) des Mantels zu erlauben, wobei die zwei Flügel bestimmt sind, die Hauptwand des Anschlags zu bilden, indem sie zwischen zwei benachbarten Zellen platziert sind.

13. Speichereinheit elektrischer Energie nach einem der vorangehenden Ansprüche, **dadurch gekennzeichnet, dass** mindestens ein Anschlag (200, 220, 230) aus einem thermisch isolierenden Material, insbesondere einem Elastomer wie ein Gummi, einem nichtmetallischen Wabenmaterial, einer Thermoplastik oder einem EPDM hergestellt ist.

14. Speichereinheit elektrischer Energie nach einem der vorangehenden Ansprüche, **dadurch gekennzeichnet, dass** mindestens einer der Anschläge (200, 220, 230) mit einer der Wände (110, 120) des Mantels (10) einstückig ist oder auf einer dieser Wände (110, 120) angebracht, ja sogar auf einer Zelle (1) direkt angebracht ist.

15. Speichereinheit elektrischer Energie nach einem der vorangehenden Ansprüche, **dadurch gekennzeichnet, dass** mindestens einer der Anschläge (200, 220, 230) eine oder mehrere Anti-Rückzug-Formen (215, 242) umfasst, die aus mindestens einer der Wände des Anschlags, insbesondere der Hauptwand (214, 240), die bestimmt ist, zwischen den Zellen (1) platziert zu sein, hervorstehend erstrecken.

16. Speichereinheit elektrischer Energie nach einem der vorangehenden Ansprüche, wobei sich die den Andruckmitteln (300) zugeordneten lösbaren Befestigungsmittel derart befinden, dass sie näher an der der Bezugswand gegenüberliegenden Wand als an der Bezugswand sind.

17. Speichereinheit elektrischer Energie nach einem der vorangehenden Ansprüche, **dadurch gekennzeichnet, dass** die der Bezugswand (110B) des Mantels gegenüberliegende Wand als Andruckmittel (300) dient.

18. Speichereinheit elektrischer Energie nach einem der vorangehenden Ansprüche, **dadurch gekennzeichnet, dass** mindestens eines der Andruckmittel (300) konfiguriert ist, um auf maximal zwei Zellen (1) zu drücken.

19. Speichereinheit elektrischer Energie nach vorangehendem Anspruch, **dadurch gekennzeichnet, dass** die Andruckmittel (300) ein L-förmiges Element (310, 320, 330) aufweisen, das bestimmt ist, am Mantel (10), insbesondere am ersten Teil des Mantels, befestigt zu sein und auf eine Fläche (2) mindestens einer Zelle zu drücken, die bestimmt ist, entlang der der Bezugswand (1) gegenüberliegenden Wand zu verlaufen, insbesondere an der Schnittstelle von zwei Zellen (1).

20. Speichereinheit elektrischer Energie nach vorangehendem Anspruch, **dadurch gekennzeichnet, dass** sie einen mit der Bezugswand (110A) des Mantels fest verbundenen Sockel (140) umfasst und eine Oberfläche (142) aufweist, die derart geneigt ist, dass das L-förmige Element (320, 330) mehrere Positionen in Bezug zu diesem Sockel einnehmen kann, so dass sich die Position des L-förmigen Elements (320, 330) in Abhängigkeit von der Konfiguration der Zellen (1) verändern kann.

21. Speichereinheit elektrischer Energie nach einem der vorangehenden Ansprüche, **dadurch gekennzeichnet, dass** die Andruckmittel (300) eine Umschnürung (340) umfassen, die von zwei Strängen gebildet ist, von denen ein verbundenes Ende mit der Bezugswand (110A) verbunden ist und die bestimmt sind, in der Nähe ihres freien Endes derart zusammenzuwirken, dass mindestens eine Zelle (1) umgeben wird.

22. Verfahren zur Montage einer Speichereinheit elektrischer Energie, aufweisend eine Vielzahl von nebeneinander angeordneten parallelepipedischen Energiespeicherzellen und einen festen Mantel, der bestimmt ist, diese Zellen zu umgeben, aufweisend zwei unterschiedliche Teile, wobei ein erster Teil des Mantels eine Bezugswand, die insbesondere von einer unteren Wand gebildet ist, aufweist:
wobei das Verfahren die folgenden Schritte umfasst:
- Platzieren, auf der Bezugswand (110) der Einheit, auf der eine Vielzahl von elastisch verformbaren Anschlägen (200; 220; 230) ausgebildet ist, der Zellen (1) derart, dass sich mindestens ein Anschlag (200; 220; 230) zwischen jedem Paar benachbarter Zellen (1) befindet,
- Platzieren von Andruckmitteln (300), die konfiguriert sind, um gegen die Zellen (1) zu drücken, um sie an die Bezugswand (110) des Mantels (10) derart zu drücken, dass diese Mittel (300) relativ zum ersten Teil des Mantels, der die Bezugswand (110A) aufweist, lösbar befestigt sind, wobei einer der Anschläge (200, 220, 230) mehrere parallele Flügel (237) umfasst, die sich von einer Wand des Anschlags hervorstehend erstrecken und bestimmt sind, mit einer Wand der Zelle zusammenzuwirken, um die Herstellungstoleranzen der Zellen (1) auszugleichen.

23. Verfahren nach vorangehendem Anspruch, **dadurch gekennzeichnet, dass** es einen vorherigen Schritt der Platzierung verformbarer Anschläge (200, 220, 230) auf der Bezugswand (110A) an vorher bestimmten Stellen der Wand (110) aufweist.

24. Verfahren nach einem der Ansprüche 22 oder 23, **dadurch gekennzeichnet, dass** zusätzliche verformbare Anschläge (200, 220, 230) auf den Zellen (1) derart platziert sind, dass sich die verformbaren Anschläge (200, 220, 230) zwischen zwei Zellen (1) in der Nähe der der Bezugswand gegenüberliegenden Wand und/oder zwischen mindestens einer der Zellen und der der Bezugswand des Mantels gegenüberliegenden Wand vor der Befestigung der Andruckmittel (300) befinden.

## Claims

1. An electrical energy storage set including:
- a plurality of energy storage cells (1) of parallelepiped shape positioned side by side, and
- a rigid shell (10) surrounding these cells (1), the shell (10) including at least two distinct portions (100A, 100B), a first portion of the shell comprising at least one reference wall, particularly consisting of a lower wall (110A),
- at least one abutment (200, 220, 230) made of an elastically deformable material which includes at least one so-called main wall (214, 224, 240), extending along a plane essentially normal to the reference wall (110A) and which is positioned between two of the cells (1), so that at least one abutment (200, 220, 230) is placed between each pair of adjoining cells (1), and
- pressing means (300) designed to press on one face of each of the cells (1) so as to press each cell (1) against the reference wall (110A), the pressing means (300) being removably attached to the first portion (100A) of the shell (10), **characterized in that** at least one of the abutments (200, 220, 230) includes several parallel fins (237) protruding from one wall of the abutment and designed to cooperate with a wall of the cell so as to compensate for manufacturing tolerances of the cells (1).

2. The energy storage set according to the preceding claim, wherein at least two abutments (200, 220) extend between each pair of cells, respectively in the vicinity of the reference wall (110A) and of a wall opposite the reference wall (110B), consisting in particular of the upper wall.

3. The electrical energy storage set according to one of the preceding claims, **characterized in that** at least one dimension of said abutments (200, 220, 230) is less than the dimension of the associated wall of the cell (1).

4. The electrical energy storage set according to one of the preceding claims, **characterized in that** at least one of the abutments (200, 220, 230) includes at least two walls (212, 214; 222, 224, 226; 232, 236, 240) perpendicular to one another which run along two respective walls of at least one cell (1).

5. The electrical energy storage set according to the preceding claim, **characterized in that** the arrangement of at least one of the walls (212; 222, 226; 232, 236) of the abutment is chosen so that said wall is positioned, either between the cells (1) and a wall of the shell parallel to the reference wall (110A) of the shell (10), or perpendicularly to the reference wall (110A) and the main wall (214; 224; 240) of the abutment.

6. The electrical energy storage set according to one of claims 4 and 5, **characterized in that** at least one of the abutments (200, 220, 230) includes a wall extending between the wall (110B) of the shell (10) opposite the reference wall and at least one of the cells (1), preferably between the pressing means (300) and said cell(s) (1).

7. The electrical energy storage set according to one of claims 4 to 6, **characterized in that** at least one of the abutments (200, 220, 230) includes at least three walls (222, 224, 226; 232, 236, 240) orthogonal to one another, running along three distinct walls of at least one energy storage cell (1) arranged so as to form a corner of a cube surrounding a corner of the cell.

8. The electrical energy storage set according to the preceding claim, **characterized in that** it includes a plurality of abutments (222, 224, 226; 232, 236, 240) in the shape of a corner of a cube, each associated with a respective corner of each cell (1) adjoining the reference wall (110A) and/or the wall (110B) opposite the reference wall of the shell (10).

9. The electrical energy storage set according to one of the preceding claims, **characterized in that** a contiguous abutment (200, 220, 230) is associated with different cells (1), the abutment comprising in particular at least one common wall (232, 236) running along a wall of the shell (110A, 120) and the walls of at least two adjoining cells, extending possibly all along the wall of the shell (10) and including at least one wall (240) protruding from the common wall, the or at least one of the protruding walls forming a main wall extending between two adjoining cells.

10. The electrical energy storage set according to the preceding claim, **characterized in that** it includes at least one abutment (230) which includes a first common wall (232), a second common wall (236) orthogonal to the first common wall (232) and a central wall (240) forming a main wall, orthogonal to the two common walls (236) and connecting them at the concavity of the two common walls (232, 236), so as to form two concave portions (230A, 230B) shaped as the corners of a cube located on either side of the main wall (240) and particularly symmetrical relative to it.

11. The electrical energy storage set according to one of the preceding claims, **characterized in that** the shell (10) includes, on one of its walls, particularly the reference wall (110) or the wall opposite the reference wall, at least one rail (112) providing for the positioning of at least one abutment (200, 220, 230).

12. The electrical energy storage set according to the preceding claim, **characterized in that** it includes at least one abutment (200) in the form of a pad (200) which includes two symmetric portions (210A, 210B) in the shape of an L and connected by their apex while still providing an opening between two wings (214), below this apex, to allow this pad (200) to engage on a rail (112) of the shell, the two wings being designed to form the main wall of the abutment by being placed between two adjoining cells.

13. The electrical energy storage set according to one of the preceding claims, **characterized in that** at least one abutment (200, 220, 230) is made of a thermally insulating material, particularly an elastomer such as rubber, a non-metallic cellular material, a thermoplastic or an EPDM.

14. The electrical energy storage set according to one of the preceding claims, **characterized in that** at least one of the abutments (200, 220, 230) is contiguous with one of the walls (110, 120) of the shell (10) or applied to one of these walls (110, 120), or applied directly to a cell (1).

15. The electrical energy storage set according to one of the preceding claims, **characterized in that** at least one of the abutments (200, 220, 230) includes one or more non-reverse shapes (215, 242) protruding from at least one of the walls of said abutment, particularly from the main wall (214, 240) designed to be placed between the cells (1).

16. The electrical energy storage set according to one of the preceding claims, wherein the removable attachment means associated with the pressing means (300) are located so that they are closer to the wall opposite the reference wall than to the reference wall.

17. The electrical energy storage set according to any one of the preceding claims, **characterized in that** the wall opposite the reference wall (110B) of the shell serves as the pressing means (300).

18. The electrical energy storage set according to one of the preceding claims, **characterized in that** at least one of the pressing means (300) is configured to press on a maximum of two cells (1).

19. The electrical energy storage set according to the preceding claim, **characterized in that** the pressing means (300) comprise an L-shaped element (310, 320, 330) designed to be attached to the shell (10), particularly to the first portion of the shell, and to press on one face (2) of at least one cell, designed to run along the wall opposite the reference wall (1), particularly at the interface of two cells (1).

20. The electrical energy storage set according to the preceding claim, **characterized in that** it includes a base (140) integral with the reference wall (110A) of the shell and having a surface (142) tilted toward so that said L-shaped element (320, 330) can take on several positions relative to this base, so that the position of the L-shaped element (320, 330) can vary depending on the configuration of the cells (1).

21. The electrical energy storage set according to one of the preceding claims, **characterized in that** the pressing means (300) include a strap (340) formed by two strands of which one linked end is connected to the reference wall (110A) and designed to cooperate in the vicinity of their free end so as to surround at least one cell (1).

22. A method for assembling an electrical energy storage set comprising a plurality of energy storage cells of parallelepiped shape positioned side by side and a rigid shell designed to surround these cells, comprising two distinct portions, a first portion of the shell comprising a reference wall, particularly consisting of a lower wall,
the method including the following steps:
- on the reference wall (110) of the set on which a plurality of elastically deformable abutments (200; 220; 230) are arranged, installation of the cells (1) so that at least one abutment (200; 220; 230) is interposed between each pair of adjoining cells (1),
- installation of pressing means (300) configured to press against the cells (1) so as to press them against the reference wall (110) of the shell (10) so that these means (300) are removably attached relative to the first portion of the shell comprising the reference wall (110A), wherein one of the abutments (200, 220, 230) includes several parallel fins (237) protruding from one wall of the abutment and designed to cooperate with a wall of the cell so as to compensate for manufacturing tolerances of the cells (1).

23. The method according to the preceding claim, **characterized in that** it includes a previous step of installing deformable abutments (200, 220, 230) on the references wall (110A) at predetermined locations on said wall (110).

24. The method according to one of claim 22 or 23, **characterized in that** additional deformable abutments (200, 220, 230) are installed on the cells (1), so that said deformable abutments (200, 220, 230) are interposed between two cells (1) in the vicinity of the wall opposite the reference wall and/or between at least one of the cells and the wall opposite the reference wall of the shell, prior to the attachment of the pressing means (300) .
